# EUROPEAN PATENT APPLICATION

(11) **EP 4 209 544 A1**
(43) Date of publication of application: **12.07.2023**
(21) Application number: 21864161.1
(22) Date of filing: 23.08.2021
(51) Int. Cl.: C08K 5/14, C08K 5/524, C08L 83/05, C08K 3/11

(54) **CURABLE SILICONE GEL COMPOSITION AND SILICONE GEL CURED PRODUCT**

(30) Priority: 03.09.2020 JP 2020148123
(71) Applicant: SHIN-ETSU CHEMICAL CO., LTD., Tokyo 1000005 (JP)
(72) Inventor: ARAKI, Tadashi, Annaka-shi, Gunma 379-0224 (JP)
(74) Representative: Mewburn Ellis LLP
(86) International application number: PCT/JP2021/030771
(87) International publication number: WO 2022/050103

(57) **Abstract**

A curable silicone gel composition including:
(A) 100 parts by mass of a branched-chain organosiloxane that has a specific structure;
(B) 0.1-50 parts by mass of a diorganopolysiloxane in which both molecular chain terminals are blocked with a diorganohydrogensiloxy group;
(C) a platinum-based catalyst;
(D) a phosphorous acid triester compound in an amount that is 3-15 molecules per one platinum atom in the (C) component, said phosphorous acid triester compound having a structure in which a chain alkyl group is bonded to an oxygen atom of phosphorous acid;
(E) an organic peroxide for which the 10-hour half-life temperature is 120°C or greater, in an amount that is 5-50 times the amount of the (D) component; and
(F) an oxidation inhibitor.
This curable silicone gel composition demonstrates superior high-temperature storability and deep section curability.

## Description

### TECHNICAL FIELD

The present invention relates to a curable silicone gel composition of excellent hot storage stability and excellent deep curability. The invention relates more particularly to a one-pack curable silicone gel composition whose nature and properties are stably maintained even under prolonged exposure to elevated temperatures in excess of 50°C, and which moreover can be completely cured down to deep regions at a relatively low heating temperature of 150°C or below (more specifically, a heating temperature of 130°C below) when open to the atmosphere. The invention further relates to the cured form of such a composition.

### BACKGROUND ART

Addition-curable silicone gel compositions are prepared as compositions which include an organohydrogenpolysiloxane having hydrogen atoms bonded to silicon atoms (SiH groups), an organopolysiloxane having alkenyl groups such as vinyl groups bonded to silicon atoms and a platinum-based catalyst, and which crosslink via hydrosilylation addition reactions of the silicon-bonded hydrogen atoms with the alkenyl groups to give a cured gel. The silicone gel cured products obtained by heating and thus curing such silicone gel compositions have excellent properties, including heat resistance, weather resistance, oil resistance, cold resistance and electrical insulating properties, and also have a low elastic modulus and low stress, and therefore are used to protect electronic components such as automotive electronic components and consumer electronic components. The low elastic modulus and low stress characteristic of silicone gel cured products are not observed in cured silicone rubbers and other elastomer products.

As noted above, since addition-curable silicone gel compositions are cured into silicone gel cured products by heating, in the case of exposing the addition-curable silicone gel compositions as one-pack type to high-temperature conditions, some problems arise, including changes in the nature of the composition such as thickening or gelation and changes in the properties of the silicone gel cured product obtained after curing. The approaches taken to avoid such problems have included methods which divide the system into two or more components and, by mixing these components just prior to use, prepare a mixed silicone gel composition, and storage means that involve refrigerating or freezing and transporting a one-pack silicone gel composition. In the former approach, there is a risk of fluctuation in the properties of the resulting silicone gel cured product due to compounding variations and mixing variations, necessitating advanced compounding and mixing techniques, and so the resulting materials cannot be used in the same way by everyone. In the latter approach, because refrigeration or freezing conditions are required in the period from the time of storage until use, the transportation and storage costs are very large, making such materials commercially disadvantageous. In light of the above, the need has grown in recent years for one-pack addition-curable silicone gel compositions of excellent storage stability which do not incur changes in properties or performance even when stored for an extended period of time at an ordinary temperature.

Within this context, JP No. 2849027 (Patent Document 1) describes a method that adds an amine compound having an ethylenediamine skeleton. JP No. 4530147 (Patent Document 2) describes a method that uses a catalyst obtained by heating and aging a specific phosphite ester compound with a platinum catalyst. Although the silicone gel compositions disclosed in these two publications do indeed have better storage stabilities than prior one-pack silicone gel compositions, even in these methods, prolonged exposure to temperatures in excess of 50°C gives rise to thickening and gelation. Hence, for the sake of performance stability, low-temperature conditions in storage and transportation are essential.

In other countries, EP 2050768 A1 and U.S. Pat. No. 6,706,840 (Patent Documents 3 and 4) disclose methods which use platinum-phosphorous acid complexes. Also, U.S. Pat. No. 4,256,616 (Patent Document 5) describes a method which uses a platinum-phosphorous acid complex and a tin salt. In addition, U.S. Pat. No. 4,329,275 (Patent Document 6) discloses a method which uses a platinum catalyst, a phosphorus compound and an organic peroxide that does not contain hydroperoxide groups. Even in the compositions described in these publications, upon prolonged exposure to temperatures in excess of 50°C, thickening and gelation end up arising. Hence, for the sake of performance stability, low-temperature conditions in storage and transportation are essential.

More recently, DE 60316102 T2 (Patent Document 7) describes a one-pack organopolysiloxane gel composition prepared from a platinum catalyst, a phosphite triester and an organic peroxide. The phosphite triester mentioned here is tris(2,4-di-tert-butylphenyl) phosphite, and the amount of organic peroxide present in the composition is at least 2 equivalents per equivalent of the phosphite triester. JP-A 2018-503709 (Patent Document 8) also describes a method which uses tris(2,4-di-tert-butylphenyl) phosphite. However, even in these methods, prolonged exposure to temperatures in excess of 50°C gives rise to thickening or gelation. Accordingly, for the sake of performance stability, low-temperature conditions are essential in a preserved state such as during storage or transportation. Hence, there has existed a desire for silicone gel compositions which do not require low-temperature storage, whose characteristics and properties are stably maintained even upon prolonged exposure to temperatures above 50°C and below 80°C, and moreover which can be completely cured down to deep regions at a heating temperature of at least 80°C and not more than 150°C (preferably a heating temperature of at least 100°C and not more than 130°C) when open to the atmosphere.

### PRIOR ART DOCUMENTS

### PATENT DOCUMENTS

Patent Document 1: JP No. 2849027
Patent Document 2: JP No. 4530147
Patent Document 3: EP 2050768 A1
Patent Document 4: U.S. Pat. No. 6,706,840
Patent Document 5: U.S. Pat. No. 4,256,616
Patent Document 6: U.S. Pat. No. 4,329,275
Patent Document 7: DE 60316102 T2
Patent Document 8: JP-A 2018-503709

### SUMMARY OF INVENTION

### TECHNICAL PROBLEM

In light of the above circumstances, one object of the present invention is to provide an addition curing-type curable silicone gel composition whose nature and properties, even in a one-pack system embodiment, are stably maintained upon prolonged exposure to a high-temperature storage environment and which moreover is capable of yielding a silicone gel cured product that has completely cured down to deep regions even at a relatively low heating temperature. Another object is to provide a silicone gel cured product obtained by curing such a curable silicone gel composition.

### SOLUTION TO PROBLEM

The inventor has conducted intensive investigations aimed at achieving these objects and has discovered as a result that by adding, to an addition reaction curing-type silicone gel composition, a phosphite triester compound having a specific structure in which linear alkyl groups are bonded to the oxygen atoms on phosphorous acid in an amount within a range of from 3 to 15 molecules per atom of platinum in a platinum-based catalyst serving as the hydrosilylation addition reaction catalyst, and moreover by including in the composition an organic peroxide having a relatively high half-life temperature (also referred to as the "half-life decomposition temperature") in an amount by weight that is from 5 to 50 times the amount by weight of the phosphite triester, it is possible to obtain a silicone gel cured product which has cured completely down to deep regions at a heating temperature of at least 80°C and not more than 150°C (preferably at least 100°C and not more than 130°C). The inventor has also found that by additionally including an antioxidant, the nature and properties of the composition remain stable even under prolonged exposure in a closed state to temperatures above 50°C and below 80°C, enabling a curable silicone gel composition of excellent hot storage stability and excellent deep curability to be obtained.

Accordingly, the present invention provides the following curable silicone gel composition and silicone gel cured product.
[1] A curable silicone gel composition which includes:
   (A) 100 parts by weight of a branched-chain organopolysiloxane having average compositional formula (1) below

      M_{α}M^{Vi}_{β}D_{γ}T_{δ} (1)

      M: R¹₃SiO_{(1/2)}
      M^{Vi}: R¹₂RSiO_{(1/2)}
      D: R¹₂SiO_{(2/2)}
      T: R¹SiO_{(3/2)}
      (wherein M, M^{Vi}, D and T are respectively the units shown above; each R is independently an alkenyl group; each R¹ is independently a substituted or unsubstituted monovalent hydrocarbon group containing no aliphatic unsaturated bonds; α is a positive number from 0.01 to 3.6 and β is a positive number from 0.01 to 3.6, with the provisos that α+β is from 0.5 to 5 and α/β is from 0.1 to 5; γ is a positive number from 10 to 1,600; and δ is a positive number from 0.5 to 3, with the proviso that (α+β)/δ is from 0.8 to 1.7);
   (B) from 0.1 to 50 parts by weight of an organohydrogenpolysiloxane having general formula (2) below 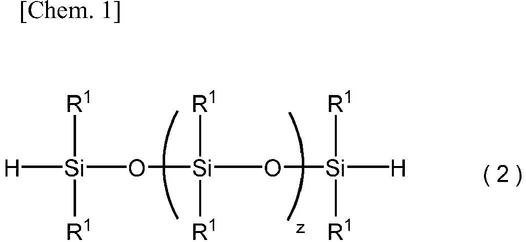 (wherein R¹ is as defined above and z is an integer from 1 to 500);
   (C) an effective amount of a platinum-based catalyst;
   (D) a phosphite triester compound having general formula (3) below

      P(O-(CH₂)ₐ-CH₃)₃ (3)

      (wherein the subscript 'a' is an integer from 3 to 7) in an amount corresponding to at least 3 molecules and not more than 15 molecules of the phosphite triester compound per atom of platinum in component (C);
   (E) an organic peroxide having a 10-hour half-life temperature of 120°C or more in an amount by weight that is at least 5 times and not more than 50 times the amount by weight of component (D); and
   (F) an effective amount of an antioxidant.
[2] The curable silicone gel composition of [1], wherein component (E) is di-tert-butyl peroxide, [2-(4-methylcyclohexyl)propan-2-yl] hydroperoxide, 2,5-bis(tert-butylperoxy)-2,5-dimethyl-3-hexyne, diisopropylbenzene hydroperoxide, 1,1,3,3-tetramethylbutyl hydroperoxide, cumene hydroperoxide or tert-butyl hydroperoxide.
[3] The curable silicone gel composition of [1] or [2] which cures to give a silicone gel cured product having a penetration, as defined in JIS K6249, of from 10 to 110.
[4] A silicone gel cured product obtained by curing the curable silicone gel composition of any of [1] to [3].

### ADVANTAGEOUS EFFECTS OF INVENTION

The curable silicone gel composition of the invention is an addition curing-type curable silicone gel composition whose nature and properties, even in a one-pack system embodiment, are stably maintained under prolonged exposure to elevated temperatures above 50°C and below 80°C and which, moreover, when heated in an open state at a heating temperature of at least 80°C and not more than 150°C (preferably a heating temperature of at least 100°C and not more than 130°C), is capable of giving a silicone gel cured product that has cured down to deep regions.

### DESCRIPTION OF EMBODIMENTS

The curable silicone gel composition of the invention is a composition which contains components (A) to (F) below as the essential ingredients. As used herein, "silicone gel cured product" (or simply "silicone gel") refers to a cured product of low crosslink density that is composed primarily of an organopolysiloxane, and "penetration as defined in JIS K6249" based on the consistency test method (1/4-scale cone) in JIS K2220 (which penetration is synonymous with the consistency (cone penetration) defined in JIS K2220) refers to a penetration of from 10 to 110. This corresponds to a measured value in rubber hardness measurement according to JIS K6253 (rubber hardness value) of 0, being a hardness so low (i.e., so soft) as to not exhibit an effective rubber hardness value, and also to a low stress (low elasticity). The silicone gel cured product differs in this respect from a "silicone rubber cured product" (rubbery elastomer).

Each ingredient is described in detail below. In the Specification, the viscosities are values measured at 23°C.

### [(A) Organopolysiloxane]

Component (A) used in the present invention is the base polymer of the curable silicone gel composition. Component (A) is a branched-chain organopolysiloxane having average compositional formula (1) below

M_{α}M^{Vi}_{β}D_{γ}T_{δ} (1)

M: R¹₃SiO_{(1/2)}
M^{Vi}: R¹₂RSiO_{(1/2)}
D: R¹₂SiO_{(2/2)}
T: R¹SiO_{(3/2)}
(wherein M, M^{Vi}, D and T are respectively the units shown above; each R is independently an alkenyl group; each R¹ is independently a substituted or unsubstituted monovalent hydrocarbon group containing no aliphatic unsaturated bonds; α is a positive number from 0.01 to 3.6 and β is a positive number from 0.01 to 3.6, with the provisos that α+β is from 0.5 to 5 and α/β is from 0.1 to 5; γ is a positive number from 10 to 1,600; and δ is a positive number from 0.5 to 3, with the proviso that (α+β)/δ is from 0.8 to 1.7) which has on the molecule a specific ratio of T unit structures that are branching structures (organosilsesquioxane units represented by T in compositional formula (1)) and also has on the molecule alkenyl groups bonded to silicon atoms (denoted as R in the triorganosiloxy units (R¹₂RSiO_{(1/2}) units) represented by M^{Vi} in compositional formula (1); also referred to in the Specification as "silicon-bonded alkenyl groups").

In formula (1), each R is independently an alkenyl group having typically from 2 to 6 carbon atoms, preferably from 2 to 4 carbon atoms, and more preferably 2 or 3 carbon atoms. Specific examples include vinyl, allyl, propenyl, isopropenyl, butenyl and isobutenyl groups. A vinyl group is preferred.

Each R¹ is independently a substituted or unsubstituted monovalent hydrocarbon group containing no aliphatic unsaturated bonds. The number of carbon atoms thereon is generally from 1 to 10, and preferably from 1 to 6. Specific examples include alkyl groups such as methyl, ethyl, propyl, isopropyl, butyl, isobutyl, tert-butyl, pentyl, hexyl, cyclohexyl, octyl and decyl groups; aryl groups such as phenyl and tolyl groups; aralkyl groups such as benzyl and phenylethyl groups; and any of these groups in which some or all hydrogen atoms are substituted with halogen atoms such as chlorine, bromine or fluorine, examples of such substituted groups being chloromethyl and 3,3,3-trifluoropropyl groups. Of these, because synthesis is easy, methyl, phenyl and 3,3,3-trifluoropropyl groups are preferred.

In above formula (1), α is a positive number from 0.01 to 3.6, preferably a positive number from 0.3 to 2.5, and more preferably a positive number from 0.5 to 2. β is a positive number from 0.01 to 3.6, preferably a positive number from 0.3 to 2.5, and more preferably a positive number from 0.5 to 2. In addition, α+β is from 0.5 to 5, preferably from 0.6 to 4, and more preferably from 0.8 to 3; and α/β is from 0.1 to 5, preferably from 0.2 to 4, and more preferably from 0.5 to 2.

Also, γ is a positive number from 10 to 1,600, preferably a positive number from 30 to 1,200, and more preferably a positive number from 50 to 1,000; δ is a positive number from 0.5 to 3, preferably a positive number from 1 to 2.5, and more preferably a positive number from 1.2 to 2.1; and (α+β)/δ is from 0.8 to 1.7, preferably from 0.85 to 1.5, and more preferably from 0.9 to 1.2.

Here, when δ, which represents the ratio of branched structures (T units) on the molecule, is too large (when there are more than 3 T units), the branched structures (crosslink points) in the base polymer become too numerous and trouble that causes thickening and gelation over time of the silicone gel composition in an uncured state tends to arise. Conversely, when δ representing the ratio of branched structures (T units) is too small (when there are fewer than 0.5 T units), the branched structures (crosslink points) become too scarce. As a result, after heating, a silicone gel cured product having sufficient hardness may not be obtained or the composition may remain uncured.

It is critical for (α+β)/δ to fall within the range of 0.8 to 1.7. The reason is that by setting α+β, which is the sum of nonreactive molecular chain ends (M units) and reactive molecular chain ends (M^{Vi} units), to a fixed ratio relative to the amount of T units that have already formed crosslink points (branched structures) within the base polymer, the silicone gel composition in an uncured state can be imparted with sufficient storage stability and, when heated in an open state, sufficient curability. In cases where (α+β)/δ is less than 0.8, i.e., when the ratio of T units is too large, trouble that causes thickening and gelation over time of the silicone gel composition in an uncured state during high-temperature storage tends to arise. On the other hand, in cases where (α+β)/δ is more than 1.7, i.e., when the ratio of T units is too small, the crosslink points (branched structures) in the base polymer become too scarce. As a result, after heating, a silicone gel cured product having sufficient hardness may not be obtained or the composition may remain uncured.

The value of γ, which is a positive number from 10 to 1,600, is reflected in the viscosity of the branched-chain organopolysiloxane serving as component (A). It is thus advantageous to use base polymers of differing numerical values for γ according to the intended application. Taking into account the viscosity of the widely used component (A), γ is preferably a positive number from 30 to 1,200, and more preferably a positive number from 50 to 1,000.

Component (A) has a viscosity that is preferably from 10 to 50,000 mPa·s, and more preferably from 100 to 10,000 mPa·s. When the viscosity of component (A) is too low, the viscosity of the resulting one-pack curable silicone gel composition also becomes low, leading to a poor workability, in addition to which the silicone gel cured product that is obtained may become too hard. When the viscosity of component (A) is too high, the viscosity of the resulting one-pack curable silicone gel composition also becomes high, which may have an adverse effect on the workability.

In this invention, the viscosity generally can be measured with a rotational viscometer (such as a BL, BH, BS or cone/plate-type viscometer or a rheometer).

In the practice of the invention, the degree of polymerization (e.g., the sum α+β+γ+δ in the above average compositional formula (1), the value of z in general formula (2) of the subsequently described component (B), etc.) or the molecular weight generally can be determined as the polystyrene-equivalent number-average degree of polymerization (or number-average molecular weight) by gel permeation chromatography (GPC) using toluene as the developing solvent (the same applies below).

The organopolysiloxane serving as component (A), so long as it is in the range of above formula (1), may of one type used alone or two or more types may be used in combination.

### [(B) Organohydrogenpolysiloxane Having Silicon-Bonded Hydrogen Atoms Only at Both Ends of Molecular Chain]

Component (B) used in this invention is a difunctional organohydrogenpolysiloxane which acts as a curing agent (crosslinking agent) that forms a crosslinked structure via hydrosilylation addition reactions between silicon-bonded hydrogen atoms in component (B) and silicon-bonded alkenyl groups in component (A). Component (B) is a linear organohydrogenpolysiloxane represented by general formula (2) below 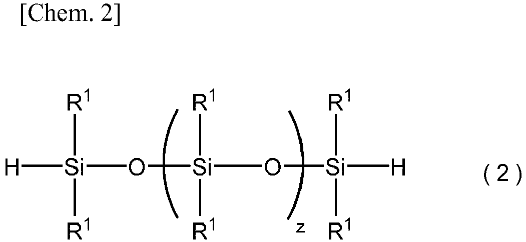 (wherein R¹ is as defined above and z is an integer from 1 to 500) and having silicon-bonded hydrogen atoms (SiH groups) only at both ends of the molecular chain (i.e., a diorganohydrogensiloxy-terminated diorganopolysiloxane).

In formula (2), R¹ is the same as described above and can be exemplified in the same way as R¹ in formula (1). Of these, methyl, phenyl and 3,3,3-trifluoropropyl groups are preferred.

The subscript 'z' which represents the number of repetitions (or degree of polymerization) of the difunctional diorganosiloxane units (Si(R¹)₂O_{2/2}) units in the molecule must be an integer from 1 to 500, and is preferably an integer from 5 to 300. When z is less than 1, the viscosity of the organohydrogenpolysiloxane serving as component (B) becomes low, resulting in a poor workability, in addition to which the silicone gel cured product obtained therefrom is too hard. On the other hand, when z is a value greater than 500, the viscosity of the organohydrogenpolysiloxane of component (B) ends up being too high, which has an adverse effect on the workability.

Component (B) has a viscosity that is preferably from 0.1 to 1,000 mPa-s, and more preferably from 1 to 500 mPa·s. When the component (B) viscosity is too low, the viscosity of the one-pack curable silicone gel composition may also be low, resulting in a poor workability, in addition to which the silicone gel cured product obtained therefrom may become too hard. When the component (B) viscosity is too high, the viscosity of the resulting one-pack curable silicone gel composition also becomes high, which may have an adverse effect on the workability.

Here, the organohydrogenpolysiloxane serving as component (B) may be of one type used alone or two or more types of completely differing numerical values for z may be used in combination.

Component (B) is added in an amount per 100 parts by weight of the organopolysiloxane of component (A) which is from 0.1 to 50 parts by weight, and preferably from 3 to 30 parts by weight. At less than 0.1 part by weight, the resulting silicone gel cured product may be too soft or, in the worst case, a silicone gel cured product may not be obtainable. On the other hand, at more than 50 parts by weight, it may be impossible to obtain the expected cold resistance or the resulting silicone gel cured product may become hard.

### [(C) Platinum-Based Catalyst]

Component (C) used in the invention is an ingredient that has hitherto been commonly used as a catalyst to promote hydrosilylation addition reactions between the silicon-bonded alkenyl groups in component (A) and the silicon-bonded hydrogen atoms (SiH groups) in component (B). This component (C), when mixed with the subsequently described phosphite triester compound (D) during preparation of the curable silicone gel composition of the invention at room temperature (23°C±15°C), reacts to easily and quantitatively form a platinum-phosphite compound complex. By forming this platinum-phosphite compound complex, even when the curable silicone gel composition undergoes prolonged exposure to temperatures above 50°C and below 80°C during storage (in a closed state), preparation as a one-pack curable silicone gel composition having stable nature and properties is possible.

Component (C) is a platinum-based catalyst (either platinum or a platinum-based compound); one that is commonly known may be used. Specific examples include platinum black, chloroplatinic acid, products of chloroplatinic acid or the like modified with an alcohol, and complexes of chloroplatinic acid and olefins, aldehydes, vinyl siloxane or acetylene alcohols.

The content of component (C) should be an effective amount, and may be suitably increased or decreased according to the desired cure rate. The content, expressed in terms of the weight of platinum atoms, is in the range of generally 0.1 to 1,000 ppm, preferably 1 to 500 ppm, and more preferably 2 to 200 ppm, with respect to the combined amount of components (A) and (B). When the content is too low, curing of the composition at a heating temperature of from 80°C to 150°C may not fully proceed; when the content is too high, the heat resistance of the resulting silicone gel cured product may decrease.

### [(D) Phosphite Triester Compound]

The phosphite triester compound serving as component (D) is an essential ingredient because, during storage of the curable silicone gel composition of the invention at room temperature (23°C±15°C), this compound forms, together with the platinum catalyst serving as component (C), a platinum-phosphite triester compound complex that makes it possible to obtain a silicone gel cured product composition whose nature and properties are stable even when the composition is in a state of prolonged exposure to temperatures above 50°C and below 80°C. Hence, it is essential for the phosphite triester compound serving as component (D) (i.e., a tri(alkoxy)phosphorus compound) to have the structure of general formula (3) below; that is, to be a phosphite triester compound in which the three alkoxy groups that form the triester structure in the molecule are all alkoxy groups with structures in which a linear alkyl group is bonded to an oxygen atom on phosphorous acid.

P(O-(CH₂)ₐ-CH₃)₃ (3)

Here, the subscript 'a' is an integer from 3 to 7.

In the above formula, each 'a' is independently an integer from 3 to 7, preferably an integer from 3 to 5, more preferably 3 or 4, and even more preferably 3.

Examples of the phosphite triester compound of component (D) include tri(n-butyl phosphite, tri(n-pentyl) phosphite, tri(n-hexyl) phosphite, tri(n-heptyl) phosphite and tri(n-octyl) phosphite. Tri(n-butyl) phosphite, tri(n-pentyl) phosphite and tri(n-hexyl) phosphite are preferred; tri(n-butyl) phosphite and tri(n-pentyl) phosphite are more preferred; tri(n-butyl) phosphite (referred to simply as "tributyl phosphite") is even more preferred.

It is essential for the phosphite triester compound serving as component (D) to be added in an amount corresponding to at least 3 molecules and not more than 15 molecules of the phosphite triester compound per atom of platinum in component (C). The reason is that, when the phosphite triester compound of general formula (3) (e.g., tributyl phosphite) is added in an amount corresponding to less than 3 molecules per atom of platinum, the platinum catalyst activity cannot be sufficiently lowered, as a result of which, upon prolonged exposure under high-temperature storage conditions (e.g., in a temperature environment above 50°C and below 80°C), the silicone gel composition thickens or gels during storage. Also, when the phosphite triester compound of general formula (3) (e.g., tributyl phosphite) is added in an amount corresponding to more than 15 molecules per atom of platinum, the amount of phosphite triester compound added ends up being too high and, even when the composition is heated to effect curing, sufficient curing does not occur or curing takes a long time; in the worst case, a silicone gel cured product cannot be obtained.

The content of the above phosphite triester compound is preferably an amount corresponding to a range of from 3 to 15 molecules of the phosphite triester compound per atom of platinum in component (C), more preferably an amount corresponding to a range of from 4 to 13 molecules of the phosphite triester compound per atom of platinum in component (C), and even more preferably an amount corresponding to a range of from 5 to 11 molecules of the phosphite triester compound per atom of platinum in component (C).

Component (D) may be added after first being uniformly mixed together with component (C), or component (C) and component (D) may each be separately added.

### [(E) Organic Peroxide]

The organic peroxide serving as component (E) functions as an oxidizing agent which causes the phosphite triester compound serving as component (D) to leave the platinum-phosphite triester compound complex that forms with reaction of the platinum catalyst serving as component (C) and the phosphite triester compound, thereby increasing the activity of the platinum catalyst. Adding component (E) enables the composition to cure completely down to deep regions in a relatively short time when exposed to a heating temperature of at least 80°C and not more than 150°C (preferably a heating temperature of at least 100°C and not more than 130°C), and so component (E) is a very important and essential ingredient. The organic peroxide used here is particularly effective when it is one having a relatively high 10-hour half-life temperature, the reason being that when the organic peroxide is used together with the subsequently described antioxidant serving as component (F), even in a state of prolonged exposure to high-temperature storage conditions, such as temperatures above 50°C and below 80°C, the organic peroxide is relatively stable, making it possible to obtain a one-pack curable silicone gel composition whose nature and properties are stably maintained.

Therefore, it is critical for the organic peroxide serving as component (E) to have a 10-hour half-life temperature (i.e., a decomposition temperature corresponding to a half-life (the time until 50 wt% of the organic peroxide decomposes) of 10 hours after the start of decomposition) of 120°C or more. The 10-hour half-life decomposition temperature is preferably 121°C or more, more preferably 122°C or more, and even more preferably 123°C or more. Although the 10-hour half-life decomposition temperature has no particular upper limit, it is generally 170°C or less, preferably 150°C or less, more preferably 140°C or less, and even more preferably 130°C or less. When the 10-hour half-life temperature is too high, the advantageous effects of including the organic peroxide may not appear.

The 10-hour half-life temperature is computed by thermally decomposing the organic peroxide at a specific temperature and determining the thermal decomposition rate constant of the organic peroxide. Specifically, a solution of the organic peroxide to be measured dissolved to a concentration of 0.1 mol/L in a solvent that is inert to the radicals (e.g., benzene) is prepared, following which the solution is sealed in a vessel, held at a given temperature within a thermostatic chamber, and the organic peroxide is thermally decomposed. Presuming the decomposition rate to be constant, the thermal decomposition rate constant is determined from the relationship between the holding time and the organic peroxide concentration change that are measured at this time. The temperature at which the half life becomes 10 hours is determined as the 10-hour half-life temperature based on this thermal decomposition rate constant.

The organic peroxide serving as component (E) is preferably one of the compounds shown below:
- di-tert-butyl peroxide (10-hour half-life temperature, 123.7°C) 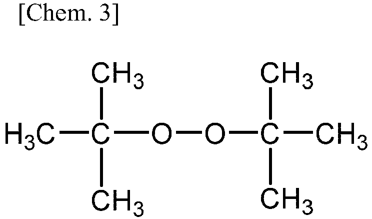
- [2-(4-methylcyclohexyl)propan-2-yl] hydroperoxide (10-hour half-life temperature, 128.0°C) 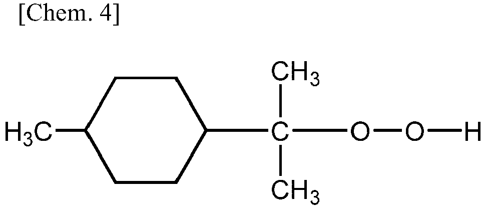
- 2,5-bis(tert-butylperoxy)-2,5-dimethyl-3-hexyne (10-hour half-life temperature, 128.4°C) 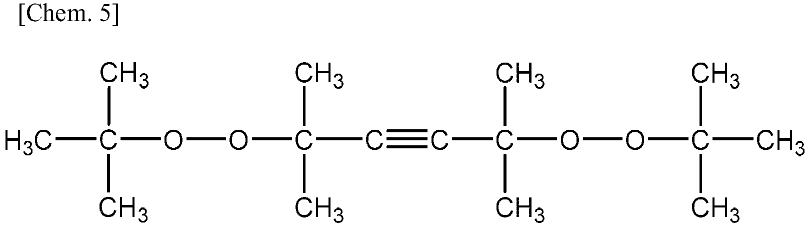
- diisopropylbenzene hydroperoxide (10-hour half-life temperature, 145.1 °C) 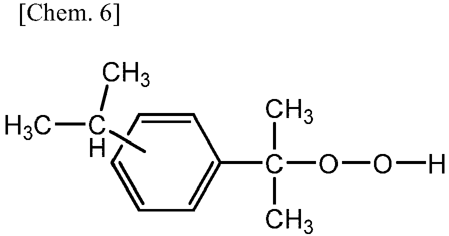
- 1,1,3,3-tetramethylbutyl hydroperoxide (10-hour half-life temperature, 152.9°C) 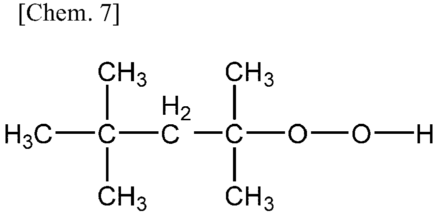
- cumene hydroperoxide (10-hour half-life temperature, 157.9°C) 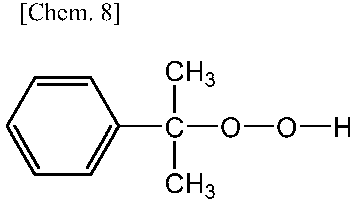
- tert-butyl hydroperoxide (10-hour half-life temperature, 166.5°C)

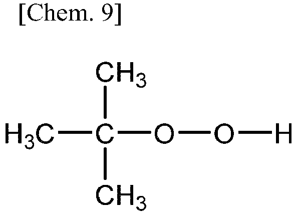

By adding the organic peroxide serving as component (E) in an amount by weight which is at least 5 times and not more than 50 times, preferably at least 8 times and not more than 40 times, and more preferably at least 12 times and not more than 38 times, the amount by weight of the phosphite triester compound serving as component (D) (e.g., tributyl phosphite), even under prolonged exposure in an environment having a storage temperature above 50°C (preferably an environment below 80°C), the one-pack curable silicone gel composition has an excellent high-temperature storability at which the nature and properties remain stable and moreover is capable of becoming a one-pack curable silicone gel composition of excellent deep curability that cures completely down to deep regions in a relatively short time when exposed in an open state to a heating temperature of up to 150°C (preferably a heating temperature of at least 80°C, and more preferably a heating temperature of at least 100°C and up to 130°C). Here, when the content of the organic peroxide serving as component (E) is an amount by weight that is less than 5 times the content by weight of the phosphite triester compound (e.g., tributyl phosphite) serving as component (D), even when exposed to a heating temperature of at least 80°C and up to 150°C, the curable silicone gel composition of the invention has difficulty curing down to deep regions in a short time. Conversely, when the content of the organic peroxide is more than 50 times the content of the phosphite triester compound (e.g., tributyl phosphite) serving as component (D), radical crosslinking polymerization reactions other than the addition reaction which proceeds when the phosphite triester compound is made to leave the platinum-phosphite triester compound complex that forms due to reaction of the platinum-based catalyst of component (C) and the phosphite triester compound of component (D) may also arise. Hence, the resulting silicone gel cured product may become fragile or may have a poor flexibility.

### [(F) Antioxidant]

The antioxidant serving as component (F) is an essential ingredient which is added so as to impart hydrogen atoms to the radicals that form with decomposition of the above organic peroxide serving as component (E), and thereby functions to stop autoxidation. When this component (F) is not included in the curable silicone gel composition of the invention, regardless of the level of the 10-hour half-life temperature of the organic peroxide serving as component (E), upon prolonged exposure to a temperature greater than 50°C, gelation ends up arising within a container. Hence, although added in a very small amount, component (F) is an essential additive.

The antioxidant that is used may be suitably selected from among hitherto known antioxidants such as phenolic compound-type antioxidants, organosulfur compound-type antioxidants, amine compound-type antioxidants and phosphorus compound-type antioxidants. However, taking into consideration decreases in the activity of the platinum catalyst due to poisoning and the like, the use of a phenolic compound-type antioxidant is preferred.

Specific examples of phenolic compound-type antioxidants include 2,6-di-tert-butyl-4-methylphenol, n-octadecyl-3-(3,5-di-tert-butyl-4-hydroxyphenyl) propionate, 2,2'-methylenebis-(4-methyl-6-tert-butylphenol), 3,9-bis[2-[3-(3-tert-butyl-4-hydroxy-5-methylphenyl)propionyloxy]-1,1-dimethylethyl]-2,4,8,10-tetraoxaspiro[5.5]undecane, 4,4'-butylidenebis(6-tert-butyl-3-methylphenol), 4,4'-thiobis(6-tert-butyl-3-methylphenol), tetrakis[methylene-3-(3,5-di-tert-butyl-4-hydroxyphenyl)propionate]methane, 2,2-thio-diethylenebis[3-(3,5-di-tert-butyl-4-hydroxyphenyl)propionate], N,N'-hexamethylenebis[3-(3,5-di-tert-butyl-4-hydroxyphenyl)propionamide], isooctyl-3-(3,5-di-tert-butyl-4-hydroxyphenyl)propionate, 1,3,5-trimethyl-2,4,6-tris(3,5-di-tert-butyl-4-hydroxybenzyl)benzene, 4,6-bis(dodecylthiomethyl)-o-cresol, calcium bis(3,5-di-tert-butyl-4-hydroxybenzyl monoethyl phosphonate), 2,4-bis[(octylthio)methyl]-o-cresol, 1,6-hexanediol-bis[3-(3,5-di-tert-butyl-4-hydroxyphenyl)propionate], 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl]-4,6-di-tert-pentylphenyl acrylate, 2,2'-methylenebis(4-ethyl-6-tertbutylphenol), 2,6-di-tert-butyl-4-ethylphenol, 1,1,3-tris(2-methyl-4-hydroxy-5-tert-butylphenyl)butane, triethylene glycol bis[3-(3-tert-butyl-4-hydroxy-5-methylphenyl)propionate], tris(3,5-di-tert-butyl-4-hydroxybenzyl)isocyanurate, diethyl[(3,5-bis(1,1-dimethylethyl)-4-hydroxyphenyl)methyl]phosphate, 2,5,7,8-tetramethyl-2-(4',8',12'-trimethyltridecyl)chroman-6-ol and 2,4-bis(n-octylthio)-6-(4-hydroxy-3,5-di-tert-butylanilino)-1,3,5-triazine.

The antioxidant included here may be of one type used alone or two or more types may be used in combination.

The content of Component (F) should be an effective amount, and may be suitably increased or decreased depending on the desired cure rate or storage stability. In general, the content is generally from 0.01 to 10 parts by weight, and preferably from 0.1 to 5 parts by weight, per 100 parts by weight of the above-described organic peroxide serving as component (E). When the component (F) content is too high, the advantageous effect of adding the organic peroxide of component (E) as an oxidizing agent so as to cause the phosphite triester compound to leave and thereby increase the activity of the platinum catalyst is lost, as a result of which it may be difficult for the curable silicone gel composition of the invention to cure down to deep regions in a short time even when exposed to a heating temperature of at least 80°C and up to 150°C. When the content is too low, decomposition of the organic peroxide serving as component (E) may proceed during storage, leading to gelation of the composition.

### [Other Optional Ingredients]

In addition to above components (A) to (F), optional ingredients may be included in the composition of the invention within ranges that do not detract from the objects of the invention. Exemplary optional ingredients include reaction inhibitors, inorganic fillers, organopolysiloxanes without silicon-bonded hydrogen atoms and silicon-bonded alkenyl groups, heat resistance-imparting agents, flame retardants, thixotropic agents, pigments and dyes.

Reaction inhibitors are ingredients for inhibiting reactions of the composition, and are exemplified by acetylene-type, amine-type and carboxylate ester-type reaction inhibitors.

Examples of inorganic fillers include fumed silica, crystalline silica, precipitated silica, hollow fillers, silsesquioxane, fumed titanium dioxide, magnesium oxide, zinc oxide, iron oxide, aluminum hydroxide, magnesium carbonate, calcium carbonate, zinc carbonate, sheet mica, carbon black, diatomaceous earth and glass fibers; and any of these fillers that have been subjected to surface hydrophobizing treatment with an organosilicon compound such as an organoalkoxysilane compound, organochlorosilane compound, organosilazane compound or low-molecular-weight siloxane compound. Silicone rubber powders, silicone resin powders and the like may also be included.

### [Curing the Composition]

Even in a one-pack embodiment of the curable silicone gel composition of the invention, a silicone gel cured product can be obtained by curing the curable silicone gel composition of the invention under temperature conditions suitable for the intended application. The heating temperature is preferably in the range of 80°C to 150°C, with the optimal temperature being more preferably in the range of 100°C to 130°C. The heating time is preferably from about 10 minutes to about 120 minutes, and especially from about 20 minutes to about 60 minutes.

The curable silicone gel composition of the invention is well-suited for use in the encapsulation or filling of electrical and electronic components.

The cured form of the curable silicone gel composition of the invention (silicone gel cured product) has a penetration by a 1/4-scale cone as defined in JIS K6249 that is from 10 to 110, preferably from 10 to 100, and more preferably from 15 to 90. At a penetration below 10, owing to the inability of the silicone gel composition to withstand stress when it cures, disconnects may arise in portions of the electronic circuit or cracks may form at the interior of the silicone gel cured product. On the other hand, when the penetration is greater than 110, the silicone gel cured product may fall out or drop down due to vibrations.

The above-described curable silicone gel composition of the invention provides a one-pack curable silicone gel composition which has an excellent high-temperature storability characterized by a stable nature and properties even under prolonged exposure to a temperature above 50°C and below 80°C, and which moreover has an excellent deep curability enabling a silicone gel cured product to be obtained that, in an open state and at a relatively low heating temperature of at least 80°C and up to 150°C (preferably a heating temperature of at least 100°C and up to 130°C), has cured down to deep regions. That is, even when the curable silicone gel composition of the invention is stored as a one-pack system at 70°C for 30 days, the nature of the composition is maintained in a liquid state without gelation, the viscosity also is maintained within 2 times, preferably within 1.1 times, the initial value, and the curability (especially the deep curability) is also maintained without changing from the initial state. Also, even when the curable silicone gel composition of the invention is stored as a one-pack system at 70°C for 30 days, the properties of the cured form thereof (silicone gel cured product) are maintained with substantially no change from the initial state. Specifically, the cured form of the curable silicone gel composition of the invention following 30 days of storage at 70°C has a penetration (1/4-scale cone, as defined in JIS K2220) which is from 10 to 110 and is maintained within ±5 points, preferably within ±2 points, of the initial penetration upon production.

### EXAMPLES

The invention is described more fully below by way of Examples and Comparative Examples, although these Examples do not limit the invention in any way. In the Examples, "parts" stands for parts by weight. Also, "penetration" refers to the penetration determined with a 1/4-scale cone in accordance with JIS K6249 and is measured using the RPM-10 automatic penetrometer from Rigosha & Co., Ltd.

### [Example 1]

Composition 1 was prepared by adding and uniformly stirring:
(A) 100 parts of a branched-chain organopolysiloxane of average compositional formula (4) below

   M_{1.21}M^{Vi}_{0.88}D_{97.7}T_{2.0} (4)

   M: (CH₃)₃SiO_{(1/2)}
   M^{Vi}: (CH₃)₂(CH₂=CH)SiO_{(1/2)}
   D: (CH₃)₂SiO_{(2/2)}
   T: (CH₃)SiO_{(3/2)}
   (in formula (1), α = 1.21, β = 0.88, γ = 97.7, δ = 2.0, α+β = 2.09, α/β = 1.375 and (α+β)/δ = 1.045) having a viscosity at 25°C of 800 mPa·s, and
(B) 10.0 parts of the dimethylpolysiloxane capped at both ends with dimethylhydrogensiloxy groups of formula (5) below 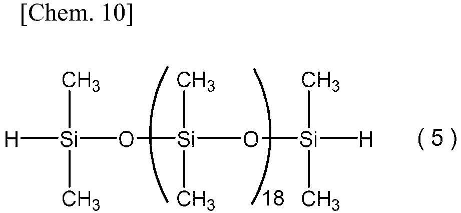 having a viscosity at 25°C of 18 mPa·s;
   and then adding and uniformly mixing the following ingredients:
(C) 0.138 part of a dimethylpolysiloxane solution of a chloroplatinic acid-vinyl siloxane complex containing 1.0 wt% of platinum atoms,
(D) tributyl phosphite (a = 3 in general formula (3); product name, JP-304 (from Tokyo Chemical Industry Co., Ltd.)) in an amount of 0.0124 part (which corresponds to 7.0 molecules per atom of platinum in component (C)),
(E) di-tert-butyl peroxide (product name, Perbutyl D (NOF Corporation); 10-hour half-life temperature, 123.7°C) in an amount of 0.30 part (which corresponds to 24.2 times the content of component (D)), and
(F) 0.25 part of a 1 wt% ethanol solution of 2,6-di-tert-butyl-4-methylphenol (representing an antioxidant content of 0.0025 part).

The resulting Composition 1 was placed in a container (dimensions: 30 mm diameter × 15 mm depth) and heat-cured at 120°C for 40 minutes, giving a cured product having a penetration of 45.

### [Example 2]

Composition 2 was prepared by adding and uniformly stirring:
(A) 100 parts of a branched-chain organopolysiloxane of average compositional formula (6) below

   M_{0.83}M^{Vi}_{0.84}D_{98.2}D^{φ}_{2.2}T_{1.5} (6)

   M: (CH₃)₃SiO_{(1/2)}
   M^{Vi}: (CH₃)₂(CH₂=CH)SiO_{(1/2)}
   D: (CH₃)₂SiO_{(2/2)}
   D^{φ}: (C₆H₅)₂SiO_{(2/2)}
   T: (CH₃)SiO_{(3/2)}
   (in formula (1), α = 0.83, β = 0.84, γ = 100.4, δ = 1.5, α+β = 1.67, α/β = 0.988 and (α+β)/δ = 1.11) having a viscosity at 25°C of 1,000 mPa·s, and
(B) 9.0 parts of the dimethylpolysiloxane capped at both ends with dimethylhydrogensiloxy groups of formula (5) below 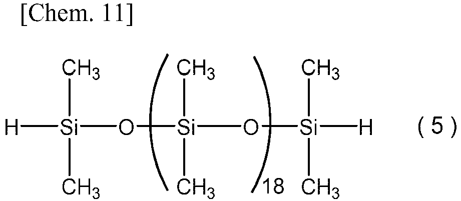 having a viscosity at 25°C of 18 mPa·s;
   and then adding and uniformly mixing the following ingredients:
(C) 0.138 part of a dimethylpolysiloxane solution of a chloroplatinic acid-vinyl siloxane complex containing 1.0 wt% of platinum atoms,
(D) tributyl phosphite (a = 3 in general formula (3); product name, JP-304 (from Tokyo Chemical Industry Co., Ltd.)) in an amount of 0.0124 part (which corresponds to 7.0 molecules per atom of platinum in component (C)),
(E) di-tert-butyl peroxide (product name, Perbutyl D (NOF Corporation); 10-hour half-life temperature, 123.7°C) in an amount of 0.30 part (which corresponds to 24.2 times the content of component (D)), and
(F) 0.15 part of a 1 wt% ethanol solution of 2,6-di-tert-butyl-4-methylphenol (representing an antioxidant content of 0.0015 part).
The resulting Composition 2 was placed in a container (dimensions: 30 mm diameter × 15 mm depth) and heat-cured at 120°C for 40 minutes, giving a cured product having a penetration of 55.

### [Example 3]

Composition 3 was prepared by adding and uniformly stirring:
(A) 100 parts of a branched-chain organopolysiloxane of average compositional formula (4) below

   M_{1.21}M^{Vi}_{0.88}D_{97.7}T_{2.0} (4)

   M: (CH₃)₃SiO_{(1/2)}
   M^{Vi}: (CH₃)₂(CH₂=CH)SiO_{(1/2)}
   D: (CH₃)₂SiO_{(2/2)}
   T: (CH₃)SiO_{(3/2)}
   (in formula (1), α = 1.21, β = 0.88, γ = 97.7, δ = 2.0,(α+β = 2.09, α/β = 1.375 and (α+β)/δ = 1.045) having a viscosity at 25°C of 800 mPa·s, and
(B) 10.0 parts of the dimethylpolysiloxane capped at both ends with dimethylhydrogensiloxy groups of formula (5) below 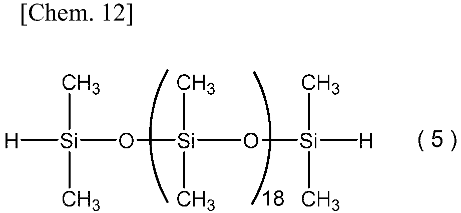 having a viscosity at 25°C of 18 mPa·s;
   and then adding and uniformly mixing the following ingredients:
(C) 0.144 part of a dimethylpolysiloxane solution of a chloroplatinic acid-vinyl siloxane complex containing 1.0 wt% of platinum atoms,
(D) tributyl phosphite (a = 3 in general formula (3); product name, JP-304 (from Tokyo Chemical Industry Co., Ltd.)) in an amount of 0.00556 part (which corresponds to 3.0 molecules per atom of platinum in component (C)),
(E) di-tert-butyl peroxide (product name, Perbutyl D (NOF Corporation); 10-hour half-life temperature, 123.7°C) in an amount of 0.20 part (which corresponds to 36.0 times the content of component (D)), and
(F) 0.10 part of a 1 wt% ethanol solution of 2,6-di-tert-butyl-4-methylphenol (representing an antioxidant content of 0.0010 part).
The resulting Composition 3 was placed in a container (dimensions: 30 mm diameter × 15 mm depth) and heat-cured at 120°C for 40 minutes, giving a cured product having a penetration of 43.

### [Example 4]

Composition 4 was prepared by adding and uniformly stirring:
(A) 100 parts of a branched-chain organopolysiloxane of average compositional formula (4) below

   M_{1.21}M^{Vi}_{0.88}D_{97.7}T_{2.0} (4)

   M: (CH₃)₃SiO_{(1/2)}
   M^{Vi}: (CH₃)₂(CH₂=CH)SiO_{(1/2)}
   D: (CH₃)₂SiO_{(2/2)}
   T: (CH₃)SiO_{(3/2)}
   (in formula (1), α = 1.21, β = 0.88, γ = 97.7, δ = 2.0, α+β = 2.09, α/β = 1.375 and ((α+β)/δ = 1.045) having a viscosity at 25°C of 800 mPa·s, and
(B) 10.0 parts by weight of the dimethylpolysiloxane capped at both ends with dimethylhydrogensiloxy groups of formula (5) below 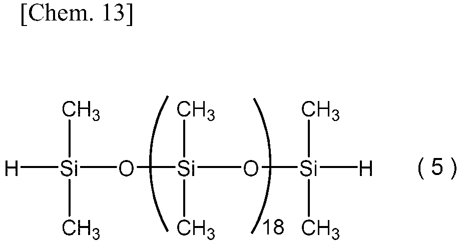 having a viscosity at 25°C of 18 mPa·s;
   and then adding and uniformly mixing the following ingredients:
(C) 0.126 part of a dimethylpolysiloxane solution of a chloroplatinic acid-vinyl siloxane complex containing 1.0 wt% of platinum atoms,
(D) tributyl phosphite (a = 3 in general formula (3); product name, JP-304 (from Tokyo Chemical Industry Co., Ltd.)) in an amount of 0.0242 part (which corresponds to 15.0 molecules per atom of platinum in component (C)),
(E) di-tert-butyl peroxide (product name, Perbutyl D (NOF Corporation); 10-hour half-life temperature, 123.7°C) in an amount of 0.30 part (which corresponds to 12.4 times the content of component (D)), and
(F) 0.10 part of a 1 wt% ethanol solution of 2,6-di-tert-butyl-4-methylphenol (representing an antioxidant content of 0.0010 part).
The resulting Composition 4 was placed in a container (dimensions: 30 mm diameter × 15 mm depth) and heat-cured at 120°C for 40 minutes, giving a cured product having a penetration of 50.

### [Comparative Example 1]

Composition 5 was prepared in the same way as in Example 1, aside from using 100 parts of a linear base polymer which does not contain the T unit structures in average compositional formula (4) of component (A) (that is, a linear organopolysiloxane of average compositional formula (7) below

M_{1.21}M^{Vi}_{0.88}D_{97.7} (7)

M: (CH₃)₃SiO_{(1/2)}
M^{Vi}: (CH₃)₂(CH₂=CH)SiO_{(1/2)}
D: (CH₃)₂SiO_{(2/2)}
(in formula (1), α = 1.21, β = 0.88, γ = 97.7, δ = 0, (α+β) = 2.09 and (α/β) = 1.375) having a viscosity at 23°C of 600 mPa·s).
The resulting Composition 5 was placed in a container (dimensions: 30 mm diameter × 15 mm depth) and heated at 120°C for 40 minutes, whereupon thickening was confirmed but the composition remained uncured.

### [Comparative Example 2]

Composition 6 was prepared in the same way as in Example 1, aside from using 100 parts of a branched-chain base polymer having 4.0 T unit structures in average compositional formula (4) of component (A) (that is, a branched-chain organopolysiloxane of average compositional formula (8) below

M_{1.21}M^{Vi}_{0.88}D_{97.7}T_{4.0} (8)

M: (CH₃)₃SiO_{(1/2)}
M^{Vi}: (CH₃)₂(CH₂=CH)SiO_{(1/2)}
D: (CH₃)₂SiO_{(2/2)}
T: (CH₃)SiO_{3/2)}
(in formula (1), α = 1.21, β = 0.88, γ = 97.7, δ = 4.0, α+β = 2.09, α/β = 1.375 and (α+β)/δ = 0.52, which falls outside the scope of the invention) having a viscosity at 23°C of 800 mPa·s).
The resulting Composition 6 was placed in a container (dimensions: 30 mm diameter × 15 mm depth) and heat-cured at 120°C for 40 minutes, giving a cured product having a penetration of 18.

### [Comparative Example 3]

Composition 7 was prepared in the same way as in Example 1, aside from using 100 parts of a branched-chain base polymer having 0.3 T unit structures in average compositional formula (4) of component (A) (that is, a branched-chain organopolysiloxane of average compositional formula (9) below

M_{1.21}M^{Vi}_{0.88}D_{97.7}T_{0.3} (9)

M: (CH₃)₃SiO_{(1/2)}
M^{Vi}: (CH₃)₂(CH₂=CH)SiO_{(1/2)}
D: (CH₃)₂SiO_{(2/2)}
T: (CH₃)SiO_{3/2)}
(in formula (1), α = 1.21, β = 0.88, γ = 97.7, δ = 0.3, α+β = 2.09, α/β = 1.375 and (α+β)/δ = 6.97, which falls outside the scope of the invention) having a viscosity at 23°C of 550 mPa·s).
The resulting Composition 7 was placed in a container (dimensions: 30 mm diameter × 15 mm depth) and heated at 120°C for 40 minutes, whereupon thickening was confirmed but the composition remained uncured.

### [Comparative Example 4]

Composition 8 was prepared in the same way as in Example 1, aside from using 100 parts of a branched-chain base polymer for which α in average compositional formula (4) of component (A) was 0 (meaning that the polymer contained no M units) (that is, a branched-chain organopolysiloxane of average compositional formula (10) below

M^{Vi}_{0.88}D_{97.7}T_{2.0} (10)

M^{Vi}: (CH₃)₂(CH₂=CH)SiO_{(1/2)}
D: (CH₃)₂SiO_{(2/2)}
T: (CH₃)SiO_{3/2)}
(in formula (1), α = 0, β = 0.88, γ = 97.7, δ = 2.0, α+β = 0.88, α/β = 0 and (α+β)/δ = 0.44, which falls outside the scope of the invention) having a viscosity at 23°C of 700 mPa·s). The resulting Composition 8 was placed in a container (dimensions: 30 mm diameter × 15 mm depth) and heat-cured at 120°C for 40 minutes, whereupon the resulting silicone gel cured product became too hard, exhibiting a penetration of 4.

### [Comparative Example 5]

Composition 9 was prepared in the same way as in Example 1, aside from using the dimethylsiloxane-methylhydrogensiloxane copolymer capped at both ends with trimethylsiloxy groups of general formula (11) below 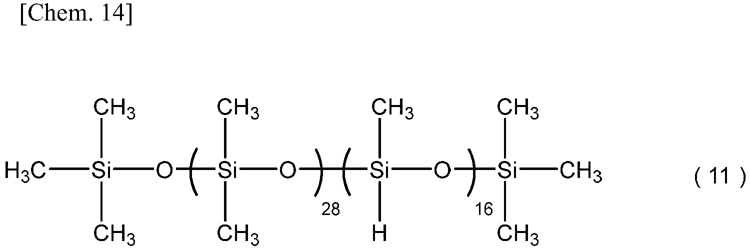 having a viscosity at 23°C of 100 mPa-s instead of using the dimethylpolysiloxane capped at both ends with dimethylhydrogensiloxy groups of general formula (5) having a viscosity at 23°C of 18 mPa·s of component (B). This Composition 9 was heat-cured at 120°C for 40 minutes, whereupon a cured product having a penetration of 38 was obtained.

### [Comparative Example 6]

Composition 10 was prepared in the same way as in Example 1, aside from using 0.01658 part of tris(2,4-tert-butylphenyl) phosphite (an amount equivalent to 5.0 molecules per atom of platinum) instead of using the tributyl phosphite of component (D). This Composition 10 was placed in a container (dimensions: 30 mm diameter × 15 mm depth) and heated at 120°C for 40 minutes, whereupon only the surface cured; the deep regions remained uncured. The penetration was 76.

### [Comparative Example 7]

Composition 11 was prepared in the same way as in Example 1, aside from using 0.00354 part of tributyl phosphite (an amount corresponding to 2.0 molecules per atom of platinum) as component (D). This Composition 11 was placed in a container (dimensions: 30 mm diameter × 15 mm depth) and heat-cured at 120°C for 40 minutes, whereupon a cured product having a penetration of 45 was obtained.

### [Comparative Example 8]

Composition 12 was prepared in the same way as in Example 1, aside from using 0.03540 part of tributyl phosphite (an amount corresponding to 20.0 molecules per atom of platinum) as component (D). This Composition 12 was placed in a container (dimensions: 30 mm diameter × 15 mm depth) and heated at 120°C for 40 minutes, whereupon only the surface cured; the deep regions remained uncured. The penetration was 52.

### [Comparative Example 9]

Composition 13 was prepared in the same way as in Example 1, aside from using di-tert-hexyl peroxide (product name, Perhexyl D (NOF Corporation); 10-hour half-life temperature, 116.4°C) in an amount of 0.30 part (which corresponds to 24.2 times the content of component (D)) instead of the di-tert-butyl peroxide of component (E). This Composition 13 was placed in a container (dimensions: 30 mm diameter × 15 mm depth) and heat-cured at 120°C for 40 minutes, whereupon a cured product having a penetration of 44 was obtained.

### [Comparative Example 10]

Composition 14 was prepared in the same way as in Example 1, aside from using the di-tert-butyl peroxide of component (E) in an amount of 0.050 part (which corresponds to 4.0 times the content of component (D)). This Composition 14 was placed in a container (dimensions: 30 mm diameter × 15 mm depth) and heated at 120°C for 40 minutes, whereupon thickening was confirmed but the composition remained uncured.

### [Comparative Example 11]

Composition 15 was prepared in the same way as in Example 1, aside from using the di-tert-butyl peroxide of component (E) in an amount of 0.7 part (which corresponds to 56.5 times the content of component (D)). This Composition 15 was placed in a container (dimensions: 30 mm diameter × 15 mm depth) and heat-cured at 120°C for 40 minutes, giving a cured product having a penetration of 43.

### [Comparative Example 12]

Composition 16 was prepared in the same way as in Example 1, aside from omitting the di-tert-butyl peroxide of component (E). This Composition 16 was placed in a container (dimensions: 30 mm diameter × 15 mm depth) and heated at 120°C for 40 minutes, whereupon the composition remained uncured.

### [Comparative Example 13]

Composition 17 was prepared in the same way as in Example 1, aside from not adding the 1 wt% ethanol solution of 2,6-di-tert-butyl-4-methylphenol of component (F). This Composition 17 was placed in a container (dimensions: 30 mm diameter × 15 mm depth) and heat-cured at 120°C for 40 minutes, giving a cured product having a penetration of 45.

### [Tests]

The following tests were performed on the compositions obtained in Examples 1 to 4 and Comparative Examples 1 to 13. The results are presented in Tables 1 and 2.

### (1) Evaluation of Initial Properties:

### Penetration

The hardnesses of the cured gels obtained in the above Examples and Comparative Examples were evaluated by measuring the penetration. Here, "penetration" refers to the penetration determined with a 1/4-scale cone in accordance with JIS K6249, and was measured using the RPM-10 automatic penetrometer from Rigosha & Co., Ltd.

### Viscosity

The viscosities of the compositions obtained in the Examples and Comparative Examples were measured at a temperature of 23°C using a rotational viscometer.

### Deep Curability

The compositions obtained in the Examples and Comparative Examples were placed in a container (dimensions: 30 mm diameter × 15 mm depth) and cured at 120°C for 40 minutes, following which the silicone gel cured product was scraped out and evaluated to determine how deeply it had cured. When the gel cured down to a depth of 15 mm (that is, the bottom of the container), the deep curability was rated as "Pass"; when a region that was shallower than a depth of 15 mm (i.e., the interior) or a deep region (bottom of the container) was liquid (uncured), the deep curability was rated as "Fail."

### (2) Evaluation of Hot Storage Stability:

### 70°C Storage Stability

One hundred grams of the composition was placed in a glass container having a capacity of 120 mL and, after purging the gap space with nitrogen, the container was closed. The filled container was then placed in a 70°C dryer and held there for 10 days. The oxygen concentration within the space at this time was purged with nitrogen down to a calculated concentration of 50 ppm or below. The characteristics of the composition were then visually confirmed; compositions which remained liquid were rated as "Pass."

### Penetration after 10 Days at 70°C

Compositions that remained in a liquid state after being left for 10 days at 70°C in the above 70°C storage stability test were heat-cured at 120°C for 40 minutes to create a cured product, and the penetration was measured in the same way as described above. Compositions which had a penetration within ±5 points of the initial penetration following production were rated as "Pass"; compositions for which this was lower than -5 points or higher than +5 points or for which measurement was impossible were rated as "Fail."

### Viscosity after 10 Days at 70°C

Compositions that were in a liquid state after being left for 10 days at 70°C in the above 70°C storage stability test were subjected to viscosity measurement at a temperature of 23°C using a rotational viscometer, and the measured value was compared with the initial value. Compositions which had a viscosity no more than twice the initial value were rated as "Pass"; compositions for which the viscosity exceeded twice the initial value and compositions which had already gelled were rated as "Fail" in terms of their storage stability.

### Deep Curability after 10 Days at 70°C

The deep curability of compositions that remained in a liquid state after being left for 10 days at 70°C in the above 70°C storage stability test was measured and evaluated in the same way as described above.

**[Table 1]**

| | | Example 1 | Example 2 | Example 3 | Example 4 |
|---|---|---|---|---|---|
| Initial properties | Penetration (1/4-scale cone) | 45 | 55 | 43 | 50 |
| | Viscosity (Pa·s) | 650 | 800 | 650 | 640 |
| | Deep curability | Pass | Pass | Pass | Pass |
| Hot storage stability | 70°C storage stability | liquid after 0 days Pass | liquid after 10 days Pass | liquid after 10 days Pass | liquid after 10 days Pass |
| | Penetration (1/4-scale cone) after 10 days at 70°C | 45 Pass | 54 Pass | 43 Pass | 49 Pass |
| | Viscosity (Pa s) after 10 days at 70°C | 660 | 820 | 680 | 660 |
| | Deep curability after 10 days at 70°C | Pass | Pass | Pass | Pass |
| Comparison | (Viscosity after 10 days at 70°C) / (Initial viscosity) | 1.02 Pass | 1.03 Pass | 1.05 Pass | 1.03 Pass |

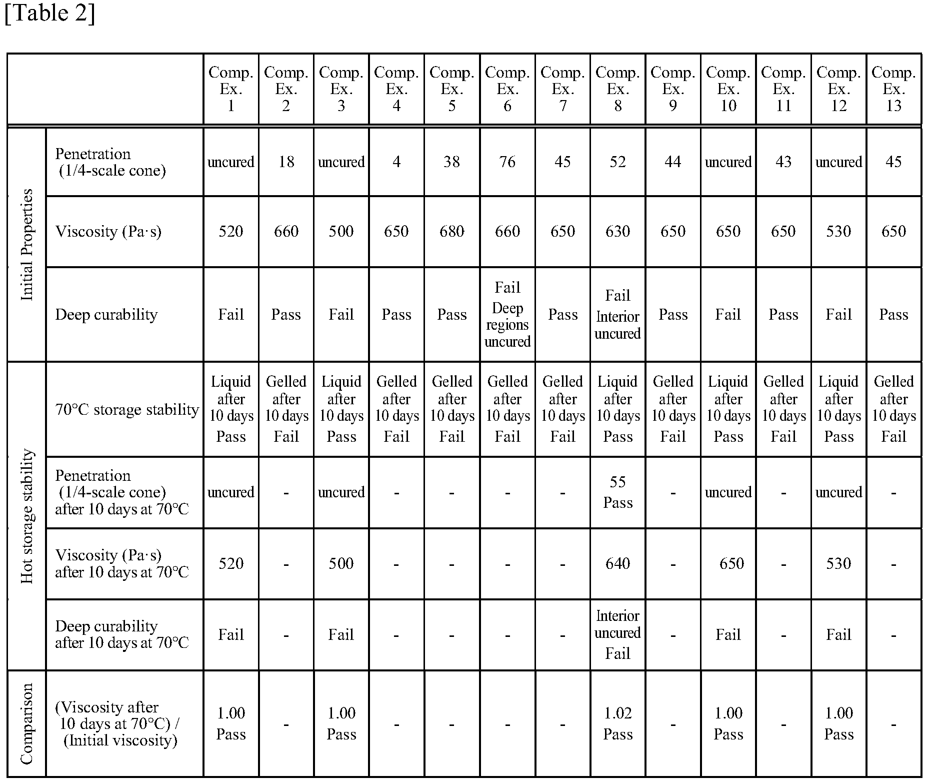

### [Test Results]

The compositions obtained in Examples 1 to 4 satisfy the essential features of the invention. Because they can cure down to deep regions when exposed in an open state at 120°C for 40 minutes, and because the initial properties and nature following production are maintained even in samples stored at 70°C for 10 days, it is apparent that these are compositions which cure at a relatively low temperature and in a relatively short time, and which have a good storage stability even at high temperatures.

By contrast, the composition in Comparative Example 1 does not contain T units within the structure of the organopolysiloxane serving as component (A), and so crosslink points do not form; as a result, when exposed for 40 minutes to a heating temperature of 120°C, the composition thickened only and did not cure. In Comparative Examples 2 and 3, the number of T units in the structure of the organopolysiloxane serving as component (A) falls outside the specified values in this invention. As a result, in Comparative Example 2, the number of T units is too high, and so gelation ended up arising during 10 days of storage at 70°C. Conversely, in Comparative Example 3, the number of T units is too low; therefore, as in Comparative Example 1, upon 40 minutes of exposure to a heating temperature of 120°C, the composition merely thickened and did not cure. In Comparative Example 4, the organopolysiloxane serving as component (A) is a base oil which contains no M units in the structure, that is, the monofunctional siloxy units making up the ends of molecular chain are composed solely of M^{Vi} units having addition curability. Hence, there are too many crosslink points and the initial penetration was 4, which is a penetration of 5 or less at which the measurement precision is questionable. Moreover, gelation ended up occurring during 10 days of storage at 70°C. Comparative Example 5 is an example in which an organohydrogensiloxane that has SiH groups only on side chains was used; that is, the organohydrogensiloxane had a structure differing from that of the organohydrogenpolysiloxane serving as component (B). Here too, gelation similarly arose during 10 days of storage at 70°C. Comparative Example 6 is an example in which a phosphite triester compound whose structure differs from that of component (D) of the invention was used. When such a phosphite triester compound was used, it is apparent that the composition did not cure to the bottom of the container (dimensions: 30 mm diameter by 15 mm) under curing conditions of 40 minutes at 120°C. Moreover, gelation ended up occurring during 10 days of storage at 70°C. In Comparative Examples 7 and 8, the phosphite triester compound serving as component (D) was added in an amount that falls outside of the values specified in this invention. In Comparative Example 7, the amount of phosphite triester compound added corresponds to 2.0 molecules per atom of platinum, which is low, and gelation arose during 10 days of storage at 70°C. Conversely, in Comparative Example 8, the amount of phosphite triester compound added corresponds to 20.0 molecules per atom of platinum, which is high. As a result, the composition cured upon 40 minutes of exposure at a heating temperature of 120°C; however, under these curing conditions, sufficient curing at the interior of the container (dimensions: 30 mm diameter by 15 mm) did not occur and uncured regions were confirmed at the interior. Comparative Example 9 is an example in which an organic peroxide having a structure differing from that of component (E) and a 10-hour half-life temperature below 120°C was used. When such an organic peroxide was used, because the 10-hour half-life temperature (116.4°C) was lower than the 10-hour half-life temperature of di-tert-butyl peroxide (123.7°C) that is suitable in this invention, a good composition that cures down to deep regions upon 40 minutes of exposure to a heating temperature of 120°C was initially obtained upon production; however, the composition ended up gelling during 10 days of storage at 70°C, and so hot storage stability was not achieved. In Comparative Examples 10 and 11, the amount in which the organic peroxide serving as component (E) was added fell outside the values specified in the invention. In Comparative Example 10, the amount of organic peroxide added was 4.0 times the amount of phosphite triester compound added as component (D), which is low. Hence, a sufficient action as an oxidizing agent that increases the activity of the platinum catalyst by causing the phosphite triester compound to leave the platinum-phosphite triester compound complex formed by reaction of the platinum-based catalyst of component (C) with the phosphite triester compound of component (D) was not obtained, and so the composition, when exposed for 40 minutes to a heating temperature of 120°C, merely thickened and remained uncured. Conversely, in Comparative Example 11, because the amount of organic peroxide added was 56.5 times the amount of phosphite triester compound added as component (D), which is too high, although it was possible to obtain a good composition that cured down to deep regions when exposed for 40 minutes to a heating temperature of 120°C, the organic peroxide decomposed during 10 days of storage at 70°C and ended up acting as an oxidizing agent, giving rise to gelation; hence, storage stability was not achieved. In Comparative Example 12, because the organic peroxide serving as component (E) was not added, the composition did not cure when exposed for 40 minutes to a heating temperature of 120°C. It is apparent from this that the organic peroxide serving as component (E) decomposes at a temperature of about 120°C and acts as an effective oxidizing agent for the phosphite triester compound serving as component (D). In Comparative Example 13, because the antioxidant added as component (F) to prevent autoxidation by giving a hydrogen atom to the radical that forms with decomposition of the organic peroxide serving as component (E) was not included, although it was possible to obtain a good composition which cures down to deep regions when exposed for 40 minutes to a heating temperature of 120°C, decomposition of the organic peroxide ended up proceeding during 10 days of storage at 70°C, resulting in gelation.

The above results demonstrate the effectiveness of the invention.

### INDUSTRIAL APPLICABILITY

The curable silicone gel composition having good storage stability of the invention, being a one-pack system, is a material that does not require mixture and is very robust to ambient changes during transportation and storage. It is thus a heat-curable material which is highly beneficial in long-term transportation and storage. Because the properties remain unchanged over an extended period of time, this material is beneficial to the end user as well. Indeed, the curable silicone gel composition of the invention may be regarded as a material that can reduce refrigeration and transportation costs and save time and effort in storage.

Moreover, because the inventive composition can cure down to deep regions when exposed for a short time to a temperature of at least 80°C and up to 150°C, it is also useful from an environmental standpoint by reducing production costs and CO₂ emissions owing to an improved speed of production.

## Claims

1. A curable silicone gel composition comprising:
(A) 100 parts by weight of a branched-chain organopolysiloxane having average compositional formula (1) below
M_{α}M^{Vi}_{β}D_{γ}T_{δ} (1)
M: R¹₃SiO_{(1/2)}
M^{Vi}: R¹₂RSiO_{(1/2)}
D: R¹₂SiO_{(2/2)}
T: R¹SiO_{(3/2)}
(wherein M, M^{Vi}, D and T are respectively the units shown above; each R is independently an alkenyl group; each R¹ is independently a substituted or unsubstituted monovalent hydrocarbon group containing no aliphatic unsaturated bonds; α is a positive number from 0.01 to 3.6 and β is a positive number from 0.01 to 3.6, with the provisos that α+β is from 0.5 to 5 and α/β is from 0.1 to 5; γ is a positive number from 10 to 1,600; and δ is a positive number from 0.5 to 3, with the proviso that (α+β)/δ is from 0.8 to 1.7);
(B) from 0.1 to 50 parts by weight of an organohydrogenpolysiloxane having general formula (2) below 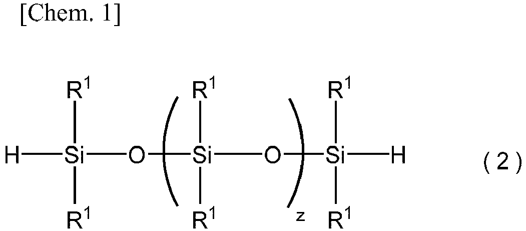 (wherein R¹ is as defined above and z is an integer from 1 to 500);
(C) an effective amount of a platinum-based catalyst;
(D) a phosphite triester compound having general formula (3) below
P(O-(CH₂)ₐ-CH₃)₃ (3)
(wherein the subscript 'a' is an integer from 3 to 7) in an amount corresponding to at least 3 molecules and not more than 15 molecules of the phosphite triester compound per atom of platinum in component (C);
(E) an organic peroxide having a 10-hour half-life temperature of 120°C or more in an amount by weight that is at least 5 times and not more than 50 times the amount by weight of component (D); and
(F) an effective amount of an antioxidant.

2. The curable silicone gel composition of claim 1, wherein component (E) is di-tert-butyl peroxide, [2-(4-methylcyclohexyl)propan-2-yl] hydroperoxide, 2,5-bis(tert-butylperoxy)-2,5-dimethyl-3-hexyne, diisopropylbenzene hydroperoxide, 1,1,3,3-tetramethylbutyl hydroperoxide, cumene hydroperoxide or tert-butyl hydroperoxide.

3. The curable silicone gel composition of claim 1 or 2 which cures to give a silicone gel cured product having a penetration, as defined in JIS K6249, of from 10 to 110.

4. A silicone gel cured product obtained by curing the curable silicone gel composition of any one of claims 1 to 3.
